# EUROPÄISCHE PATENTSCHRIFT

(11) **EP 0 590 375 B1**
(45) Veröffentlichungstag und Bekanntmachung des Hinweises auf die Patenterteilung: **01.05.1996**
(21) Anmeldenummer: 93114464.6
(22) Anmeldetag: 09.09.1993
(51) Int. Cl.: B60C 11/12

(54) **Drehsinngebundener Fahrzeugreifen mit Querrillen**
Directional tyre having transverse grooves
Bandage pneumatique directionnel ayant des rainures transversales

(30) Priorität: 26.09.1992 DE 4232306
(43) Veröffentlichungstag der Anmeldung: 06.04.1994
(73) Patentinhaber: Continental Aktiengesellschaft, D-30165 Hannover (DE)
(72) Erfinder: Huinink, Heinrich, D-30823 Garbsen (DE); Baumgarten, Rainer, D-29525 Uelzen (DE)

(56) Entgegenhaltungen:
- EP-A- 0 485 884
- US-A- 4 934 424
- PATENT ABSTRACTS OF JAPAN vol. 14, no. 450 (M-1030) & JP-A-21 079 509 (YOKOHAMA RUBBER)
- PATENT ABSTRACTS OF JAPAN vol. 15, no. 307 (M-1143) & JP-A-31 012 704 (YOKOHAMA RUBBER)
- PATENT ABSTRACTS OF JAPAN vol. 15, no. 174 (M-1109) & JP-A-30 038 412 (BRIGESTONE)
- PATENT ABSTRACTS OF JAPAN vol. 14, no. 454 (M-1031) & JP-A-21 082 502 (YOKOHAMA)

## Beschreibung

Die Erfindung bezieht sich auf Fahrzeugreifen gemäß dem Oberbegriff des Anspruches 1 oder 4, insbeondere auf Luftreifen mit radialer Karkasse und aussteifenden Gürtellagen.

Unabhängig davon, ob die Profilierung der Laufflächen drehsinngebunden ist oder nicht, ob also die Querrillen eine Pfeilung aufweisen oder nicht, zeigen die meisten Reifen den als Sägezahneffekt bezeichneten Effekt, daß die in die Bodenaufstandsfläche zuletzt einlaufende Kante eines Positives größeren Abrieb erleidet als die zuerst einlaufende Kante.

Drehsinngebundene Einschnitte sind bekannt aus den DE-OS 29 08 219 und 30 28 112. In beiden Schriften wird eine Neigung der Einschnitte im Reifenlängsschnitt gegenüber der Radialen gelehrt, wobei verschiedene Schnitttiefen zulässig sind.

Aus US-PS 2,708,957 sind ununterbrochene Längseinschnitte unterschiedlicher, in Positivmitte größter Tiefe bekannt.

Aus US-PS 4,934,424 sind Quereinschnitte unterschiedlicher, in Positivmitte größter Tiefe bekannt.

Aus JP-PA 63-149 204 ist es bekannt, in einer drehsinngebundenen Profilierung die voreilenden Kanten von Positiven durch kurze Längseinschnitte aufzuweichen.

Aus der EP-PA 0 485 884, insbesondere deren Figuren 2 bis 4, ist es bekannt, durch wechselnde Ausrichtung von Einschnitten zwischen vor- und nacheilenden Klotzkanten zu differenzieren; die Einschnitttiefe und Einschnittdichte, also die Abstände zwischen benachbarten, parallelen Einschnitten, wird dabei nicht variiert.

JP-A-31 12 704 lehrt, den Abstand zwischen Quereinschnitten zur nacheilenden Kante hin zu verkleinern und so den nacheilenden Klotzbereich mehr aufzuweichen als den voreilenden.

JP-PA 21-079 509 lehrt ein Reifenprofil mit Quereinschnitten, deren Tiefe in mehreren Stufen von der voreilenden Klotzkante bis zur nacheilenden Klotzkante ansteigt. Hierdurch wird eine größere Aufweichung des Klotzes an seiner nacheilenden Seite als an seiner voreilenden erreicht. Beide letztgenannten Stände der Technik kommen der nachfolgend erläuterten Aufgabenstellung und Erfindung am nächsten.

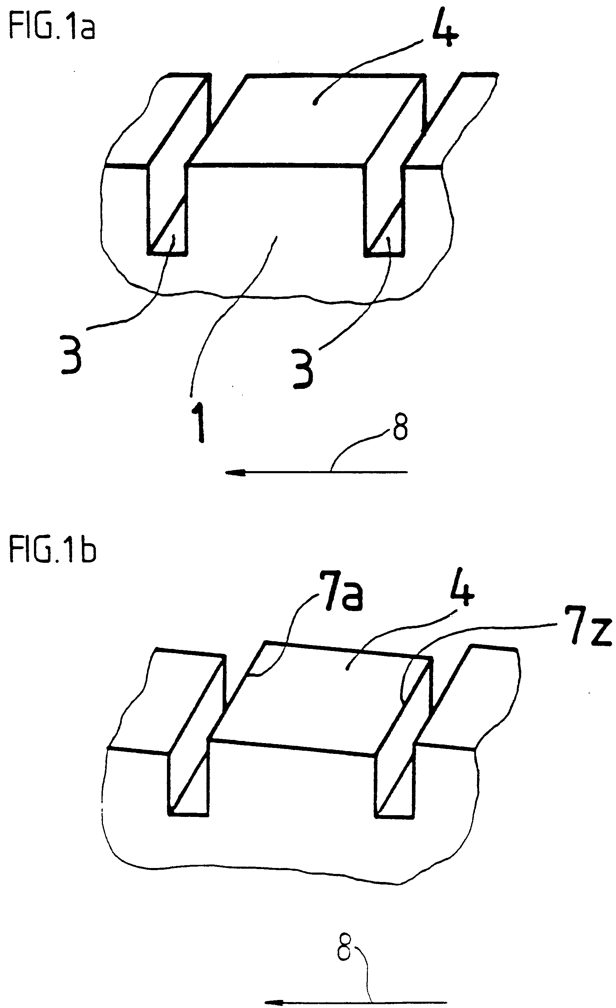

Zur Erläuterung der an sich bekannten "Sägezahnbildung" dienen die beiden Figuren 1a und 1b:
Fig. 1a zeigt ein klotzförmiges Profilpositiv eines Fahrzeugreifens 1 im Neuzustand. Vereinfachend ist die Reifenkrümmung sowohl in der Umfangsrichtung als auch in der axialen Richtung vernachlässigt, es ist also in jeder Beziehung eine Abwicklung dargestellt. Der unterhalb der Figur angeordnete dicke Pfeil mit dem Bezugszeichen 8 deutet die vorgesehene Laufrichtung an. Der gezeigte Profilblock 4 ist sowohl vorne als auch hinten durch je eine Querrille 3 begrenzt.

Die Fig. 1b zeigt den gleichen Klotz 4 nach etwa 20 % der Lebensdauer: Die zuerst in die Bodenaufstandsfäche einlaufende Klotzkante 7a hat weniger Abrieb erfahren als die zuletzt in die Bodenaufstandsfläche einlaufende Kante 7z.

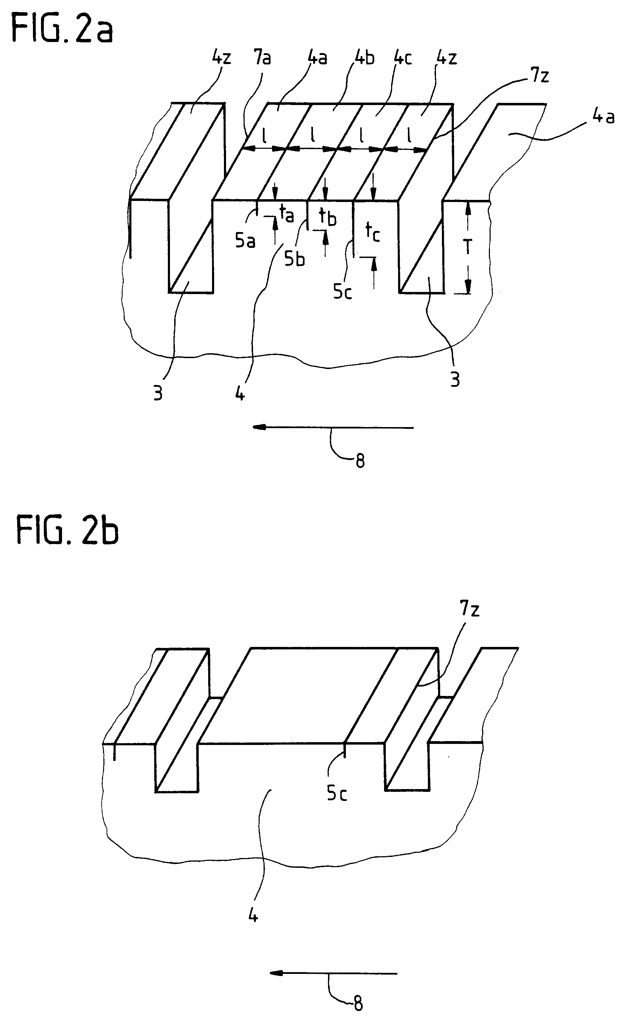

Im letztgenannten Dokument, der JP-PA 21-079 509, ist ein Mittel gegen den unerwünschten Sägezahneffekt beschrieben, nämlich die im Drehsinn zunehmende Einschnitttiefe; dieses Mittel und das ihm anhaftende Problem wird nachfolgend anhand der Figuren 2a und 2b näher erläutert:

Fig. 2a zeigt einen querlamellierten Klotz 4. Alle Einschnitte 5a, 5b und 5c haben den gleichen Abstand l untereinander bzw. zur jeweils benachbarten Querrille 3. Hingegen nimmt die Einschnitttiefe zur nacheilenden Kante hin zu. Von der Tiefe ta des zuerst in die Aufstandsfläche einlaufenden Einschnittes 5a bis hin zur Tiefe tc des zuletzt in die Aufstandsfläche einlaufenden Einschnittes 5c ist die Folge der Einschnitttiefen t monoton steigend, sodaß die Steifigkeit vom voreilenden Klotzbereich 4a über 4b und 4c bis zum letzten, 4z, monoton abnimmt, wodurch die nacheilende Klotzkante 7z im Abrieb an die voreilende Kante 7a angepaßt ist.

Die Figur 2b, die im gleichen Maßstab den gleichen Klotz 4 nach Abrieb der Hälfte der ursprünglichen Profiltiefe T zeigt, erläutert das von den Erfindern erkannte Problem: Da die Einschnitte 5a und 5b im in Figur 2a gezeigten Neuzustand eine kleinere Tiefe ta bzw. tb als die halbe Profiltiefe T hatten, erscheinen sie hier nicht mehr, sondern nur noch ein Rest des letzten Einschnittes 5c. Bekanntlich ist der abgeriebene Block 4 härter und die Klotzerweichung durch Einschnitte verringert; schlecht ist jedoch, daß der bei dieser Ausbildung sich durch Abrieb einstellende Steifigkeitszuwachs die Klotzoberfläche nicht gleichmäßig erfaßt, sondern sich zunächst auf den zuerst in die Aufstandsfläche einlaufenden Bereich konzentriert, während ein Einschnitt im Bereich der zuletzt einlaufenden Profilklotzkante 7z am längsten erhalten bleibt. Auf diese Weise wird sich der Steifigkeitsunterschied zwischen vor- und nacheilender Klotzkante in der ersten Hälfte der Reifenlebensdauer verändern, was zu Kompromissen zwingt.

Figur 3 zeigt - wie aus der JP-A-31 12 704 bekannt - einen Profilklotz 4 mit drei Quereinschnitten 5a, 5b und 5c. Alle drei Einschnitte 5 weisen die gleiche Tiefe t auf, die in diesem Falle - wie bevorzugt - mit der Profiltiefe T übereinstimmt. Durch die drei Einschnitte wird der Klotz 4 in vier Bereiche 4a, 4b, 4c und 4z gegliedert. Der gemäß der Umlaufrichtung 8 zuerst in die Bodenaufstandsfläche einlaufende Bereich 4a ist aufgrund seines großen Abstandes la zur vorauseilenden Querrille 3 am steifesten. Im nachfolgenden Bereich 4b ergibt sich eine verringerte Steifigkeit, weil der Abstand lb zwischen den beiden ihn (4b) begrenzenden Einschnitten 5a und 5b kleiner als der Abstand la ist. Im darauffolgenden Bereich 4c zwischen den Einschnitten 5b und 5c ist der Einschnittabstand lc gegenüber lb abermals verringert mit dem Ergebnis noch weiter reduzierter Steifigkeit. Im letzten Bereich 4z stimmt der Abstand lz zwischen dem Einschnitt 5c und der nacheilenden Querrille 3 mit dem Einschnittabstand lc des vorhergehenden Bereiches überein. Gegenüber Biegung entgegen der Umfangsrichtung verhält sich dieser Bereich dennoch etwas weicher als der Bereich 4c, weil sich diese Lamelle aufgrund der nachfolgenden Querrille 3 nicht gegenüber einer folgenden Lamelle abstützt.

Aufgabe der Erfindung ist es, die Bekämpfung des Sägezahneffektes und der damit zusammenhängenden Geräuschbelästigungen zu verbessern über die gesamte Reifenlebensdauer.

Die Aufgabe wird erfindungsgemäß gelöst durch die Merkmale des Anspruches 1 und/oder 2 oder des Anspruches 4. Gemäß Anspruch 1 nimmt die Einschnittdichte im Drehsinn zu und nicht oder nicht nur die Einschnitttiefe.

Bei alleiniger Einschnittabstands-Variation bleibt die Varianz der Klotzaufweichung unabhängig vom eintretenden Abrieb erhalten.

Bei einer alleinigen Einschnitttiefen-Variation verändert sich hingegen nach eingetretenem Abrieb die Varianz der Klotzaufweichung insofern, als die Erstreckung in Umfangsrichtung des am wenigsten oder gar nicht aufgeweichten Klotzbereiches in der Umgebung der vorauseilenden Kante zunimmt. Dies gilt sowohl für Längs- als auch für Quereinschnitte.

Alle Reifen zeigen - je nach Geschwindigkeitsklasse und Bauweise unterschiedlich stark - den Effekt, daß die Sägezahnbildung gegen Ende der Lebensdauer abnimmt. Dieser Effekt wird darauf zurückgeführt, daß die Peripherie des noch verbliebenen Klotzes aufgrund ihrer geringeren Radialerstreckung und ihrer geringeren Masse steifer gegenüber dem Gürtel festgelegt ist als im Neuzustand, sodaß die Rutschbewegungen - besonders beim Klotzauslauf - geringer sind. Nach den bisherigen Versuchsergebnissen scheint eine alleinige Tiefenvariation zu einer Überkompensation zu führen, weshalb sich eine auf den jeweiligen Reifen zugeschnittene Kombination aus Abstands- und Tiefenvariation der Einschnitte empfiehlt; für Quereinschnitte ist nur die Kombination, für Längseinschnitte auch eine alleinige Abstandsvariation erfindungsgemäß möglich.

Die Differenz zwischen voreilender und nacheilender Klotzsteifigkeit und/oder zwischen voreilender und nacheilender Klotzlänge sollte in den axial äußersten Klotzreihen größer als in den axial weiter innen liegenden Klotzreihen sein.

Weitere Verbesserungen lassen sich dadurch erreichen, daß über der Laufrichtung gesehen eine differenzierte Positivmenge angeboten wird, das heißt, daß die nacheilenden Kanten länger ausgeführt sind als die voreilenden. Auf diese bevorzugte Kombination ist Anspruch 5 gerichtet mit den darauf rückbezogenen Ansprüchen 6 bis 8 und 10.

Bei erfindungsgemäßen Fahrzeugreifen kommt es nicht darauf an, ob sie Umfangsrillen aufweisen oder nicht; zwar sind Umfangsrillen aus anderen Gründen, nämlich der Querkraftübertragung, in der Regel erforderlich, zur Entstehung und Behebung des der Erfindung zugrunde liegenden Problemes sind sie hingegen nicht erforderlich; deshalb bleiben in den unabhängigen Ansprüchen Längsrillen oder Umfangsrillen unerwähnt. Hieraus ist also nicht zu schließen, daß erfindungsgemäße Reifen keine Längs- oder Umfangsrillen aufweisen dürfen.

Die Erfinder haben erkannt, daß die Sägezahnbildung im wesentlichen darauf beruht, daß die zuerst in die Bodenaufstandsfläche einlaufende Kante bei ihrer Hauptbelastung, nämlich dem Einlauf, an Rutschbewegungen durch die hohe Flächenpressung gehindert ist, während die zuletzt einlaufende Kante bei ihrer Hauptbelastung, nämlich dem Auslauf, aufgrund der Massenträgheit des Positives länger an der Bodenberührung teilnimmt, aber kurz vor dem Abheben nur noch mit so weit verringertem Bodendruck, daß Rutschen eintritt.

Hierauf aufbauend wäre die nächstliegende Strategie gewesen, den Bodendruck beim Auslauf der nacheilenden Kante möglichst abrupt auf Null zu senken oder - die Ursache beibehaltend, den Effekt jedoch kompensierend - am Auslauf abriebfesteres Material einzusetzen als am Einlauf. Die erste Denkrichtung scheiterte an konkurrierenden kinematischen Gesichtspunkten, die zweite an zu großem Aufwand für eine Serienproduktion.

Mit dem Präfix "Quer-" im Zusammenhang mit Querrillen oder Quereinschnitten oder Querkanten sind Rillen bzw. Einschnitte bzw. Kanten gemeint, die zur Umfangsrichtung einen Winkel von mindestens 30° einschließen, so daß die axiale Komponente der Rillen- bzw. Einschnittlänge mindestens 50 % der Länge selbst beträgt. Das zwischen benachbarten Einschnitten stehen bleibende Gummi wird häufig als "Lamelle" bezeichnet.

Die erfindungsgemäße Ungleichmäßigkeit der Aufweichung durch Einschnitte läßt sich sowohl mit Längseinschnitten als auch mit Quereinschnitten erreichen; nach den bisherigen Versuchsergebnissen ermöglicht die Querlamellierung bei geeigneter Bemessung der Varianz des Einschnittabstandes und der an sich bekannten Varianz der Einschnitttiefe eine praktisch vollkommene Kompensation des bekämpften Effektes, während mit der entgegen der Laufrichtung zunehmenden Längslamellierung immerhin eine solche Milderung des bekämpften Effektes erreicht wurde, die ausreichend erscheint.

Die bislang überlegenen Ergebnisse der Kombination aus Abstands- und Tiefenvariation von Quereinschnitten liegen möglicherweise neben der Aufweichung der nacheilenden Profilklotzbereiche auch daran, daß die Klotzbiegesteifigkeit entlang der Drehrichtung gesenkt ist.

Vorteilhafterweise wird die Aufweichung durch Einschnitte entlang der Umlaufrichtung, wie an sich bekannt, in mehreren Zwischenstufen oder, wie zuvor nicht bekannt, gar stufenlos variiert. Eine lineare Erhöhung der Aufweichung entlang der Umlaufrichtung scheint dabei nicht das Optimum zu sein; vielmehr empfiehlt sich ein vor der nacheilenden Klotzkante überproportionaler Steifigkeitsabfall über der Laufrichtung.

Mit zumindest im Abstand und ggf. auch in der Tiefe variierten Quereinschnitten kann die Klotzsteifigkeit zwar in mehreren Stufen, jedoch nicht stufenlos gesenkt werden. Mit Längslamellen ist dagegen auch eine stufenlose Steifigkeitsvarianz über der Umlaufrichtung möglich.

Die nachfolgenden Fig. 4 - 10 zeigen verschiedene Varianten der erfindungsgemäßen Lösung in maßstabgerechter, räumlicher Darstellung jeweils im Neuzustand, und zwar:
- Fig. 4: eine Varianz der Klotzaufweichung allein durch Quereinschnitte und Varianz sowohl deren Abstandes als auch deren Tiefe,
- Fig. 5: eine Varianz der Klotzaufweichung allein durch Längseinschnitte und Varianz der Einschnitttiefe,
- Fig. 6: eine Varianz der Klotzaufweichung allein durch Längseinschnitte und Varianz sowohl der Einschnitttiefe als auch -dichte über der Axialen,
- Fig. 7: ähnlich Fig. 6 jedoch in Kombination mit größerer Länge der nacheilenden Kante gegenüber voreilender
- Fig. 8: eine Varianz der Klotzaufweichung allein durch Quereinschnitte und Varianz sowohl der Lamellentiefe als auch der Lamellendichte über der Axialen, in Kombination mit - anders als in Fig. 7 erreichter - größerer Länge der nacheilenden Kante als voreilender,
- Fig. 9: eine Draufsicht auf ein Reifenprofil mit mehreren Klotzreihen analog Fig.8, wobei die Verdichtung der Längseinschnitte zu den nacheilenden Klotzkanten hin in den beiden axial innersten Klotzreihen weniger stark ausgeprägt ist als in den vier axial äußeren und wobei zudem in den axial äußersten Klotzreihen kurze Längseinschnitte die nacheilenden Kanten weiter aufweichen, und
- Fig. 10: ein ähnliches Reifenprofil wie Fig. 9, wobei jedoch die Aufweichungsdifferenz zwischen voreilenden Klotzbereichen und nacheilenden Klotzbereichen über der Axialen im wesentlichen konstant ist, aber die Längendifferenz zwischen voreilenden und nacheilenden Klotzkanten über der Axialen von außen nach innen abnimmt.

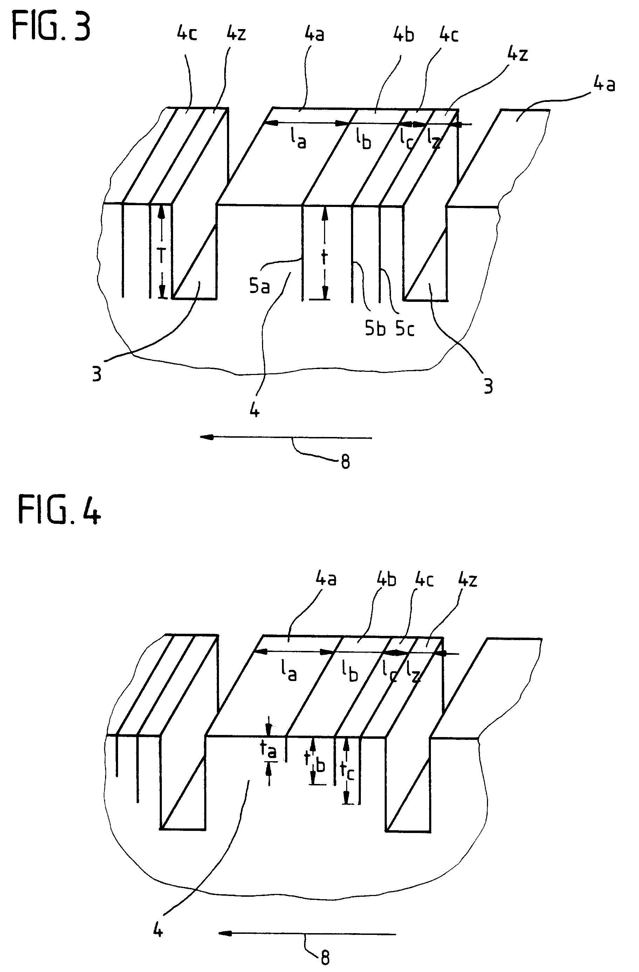

Wie die bereits behandelten, den Stand der Technik und dessen Problem zeigenden Figuren 1a, 1b und die, frühere Lösungen zeigenden, Figuren 2a, 2b und 3, zeigen die Figuren 4 bis 8 jeweils ein Profilpositiv 4, dessen mit dem dicken Pfeil 8 angedeutete Drehrichtung von rechts nach links weist. Natürlich sollen alle in Reifenumfangsrichtung aufeinanderfolgenden Profilpositive 4 in der jeweils dargestellten Art lamelliert sein; dessen unbeschadet ist die exakte Bemessung in Umfangsrichtung nur an Klötzen gleicher pitch-Länge gleich und im übrigen in an sich bekannter Weise an die schwankenden pitch-Längen angepaßt, insbesondere ist bei längeren Klötzen eine stärkere Lamellierung vorgesehen als bei kürzeren.

Die deshalb bevorzugte Kombination beider Variierungsarten von Quereinschnitten ist in Figur 4 dargestellt. Der voreilende Bereich 4a des Klotzes 4 ist wegen des großen Quereinschnitt-Abstandes la und der geringen Quereinschnitt-Tiefe ta am steifesten. Die Folge der Einschnitt-Tiefen ta, tb bis tc ist monoton steigend, die Folge der Einschnitt-Abstände la, lb, lc bis lz ist monoton fallend. Infolgedessen fällt die Steifigkeit in der Folge der Klotzbereiche 4a, 4b, 4c bis 4z monoton und überproportional ab.

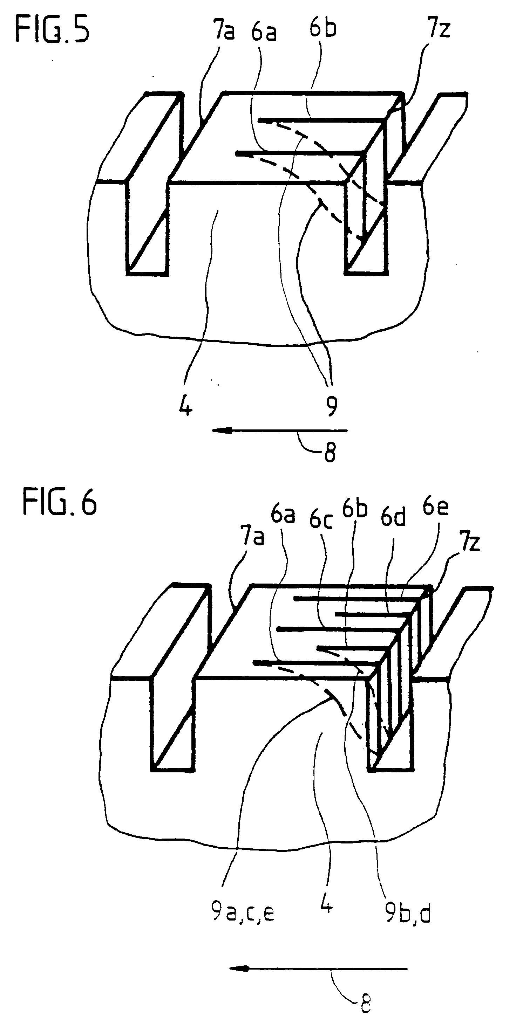

Im Gegensatz zu den Figuren 2 bis 4 zeigen die Figuren 5 und 6 eine Längslamellierung von Klötzen 4, wie sie sich insbesondere für Reifenschultern von PKW-Reifen empfiehlt.

In Figur 5 sind zwei Längseinschnitte 6a und 6b in einem Klotz 4 dargestellt, die kurz hinter der vorauseilenden Klotzkante 7a beginnen und bis zur nacheilenden Klotzkante 7z reichen. Die gestrichelte Linie 9 zeigt den für beide Einschnitte 6a, 6b gleichen, s-förmig geschwungenen Tiefenverlauf.

Figur 6 zeigt eine Steigerung hierzu; neben dem Merkmal einer zunehmenden Tiefe der identisch zur Figur 5 ausgeführten Einschnitte in den Klotz 4, die als 6a, 6c und 6e bezeichnet sind, ist das Merkmal gezeigt, daß sich jeweils zwischen zwei benachbarten der langen Einschnitte 6a, 6c und 6e noch ein weiterer, aber kürzerer Einschnitt 6b bzw. 6d befindet. Wiederum ist in gestrichelter Linie der jeweils zugehörige Tiefenverlauf angegeben und zwar 9a,c,e für die Einschnitte 6a, 6c und 6e sowie 9b,d für die Einschnitte 6b und 6d.

Dadurch, daß die kurzen Einschnitte 6b und 6d erst weit hinter der voreilenden Klotzkante 7a beginnen, weichen sie dort praktisch nicht auf; sie vergrößern aber deutlich die Klotzaufweichung unmittelbar vor der nacheilenden Kante 7z.

So wie es zur Erfindung gehört, an Längseinschnitten nur die Einschnitttiefe stufenlos zu variieren (siehe Figur 5), gehört auch zur Erfindung, nur den Einschnittabstand zu variieren; bei Quereinschnitten ist die Kombination beider Maßnahmen geschützt. Da auch bei der Längslamellierung das bereits bei der Querlamellierung Gesagte zur Varianzänderung über dem Abrieb gilt und deshalb eine Kombination beider Variationsarten wie in Figur 6 dargestellt bevorzugt wird, ist auf eine eigene Figur für die alleinige Abstandsvariation zwischen Längseinschnitten verzichtet worden.

An ein und demselben Reifen ist auch eine Kombination von Längs- und Quereinschnitten mit der erfindungsgemäßen Variation von Tiefe und/oder Abstand zueinander, vorzugsweise jedoch nicht innerhalb ein und der selben Klotzspur, möglich. Insbesondere empfiehlt sich zumindest für die bezüglich der Fahrzeugmitte axial äußere Spur zur besseren Seitenkraftübertragung die Anordnung von Längseinschnitten in erfindungsgemäßer Abstands- und/oder Tiefenvariation und für axial innere Klotzspuren die Anordnung von Quereinschnitten in erfindungsgemäßer Abstands- und Tiefenvariation.

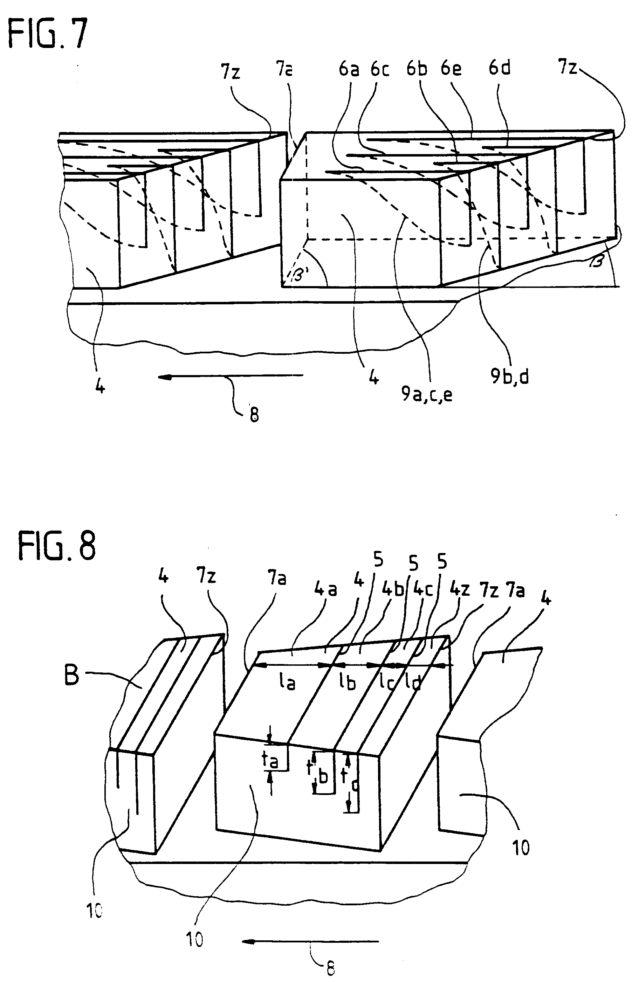

Die erfindungsgemäße drehsinnspezifische Klotzaufweichung ist überdies kombinierbar mit einer Verlängerung der nacheilenden Klotzkanten gegenüber den voreilenden. Solche Kombinationen zeigen die beiden Figuren 7 und 8.

Figur 7 zeigt zwei in der Umfangsrichtung aufeinanderfolgende Klötze 4 mit Längseinschnitten 6, die analog Figur 6 sowohl in ihrer Dichte als auch in ihrer Tiefe entgegen dem Drehsinn 8 zunehmen, wodurch die nacheilenden Kanten 7z weicher sind als die voreilenden Kanten 7a. Zur Détaillierung dieser Längseinschnitte sind die gleichen Bezugszeichen verwandt wie in Figur 6, sodaß die entsprechenden Beschreibungsstellen zur Vermeidung von Wiederholungen auch hierauf zu lesen sind.

Hier sind die bereits in Figur 6 gezeigten Maßnahmen zur erfindungsgemäßen Aufweichung der nacheilenden Klotzkanten 7z kombiniert mit einer Verlängerung der nacheilenden Klotzkanten 7z gegenüber den voreilenden 7a und zwar dadurch, daß der Winkel β, den die nacheilenden Klotzkanten 7z mit der in Umlaufrichtung weisenden Klotzkante einschließt, kleiner ist als der Winkel β', den die voreilende Klotzkante 7a zur Umfangsrichtung einschließt. Hierdurch wird der Effekt des verminderten Abriebes in der Höhe noch weiter gesteigert.

Natürlich wäre auch eine Kombination der Längseinschnitte 6 mit ihrer entgegen der Laufrichtung 8 zunehmenden Dichte und ggf. Tiefe mit der anderen Variante zur Verlängerung der nacheilenden Klotzkante 7z möglich, daß nämlich die seitlichen Klotzkanten über der Umlaufrichtung 8 aufeinander zulaufen. Zur Vermeidung einer übergroßen Anzahl von Figuren wird auf die Darstellung dieser selbstverständlich auch zum Schutzumfang gehörenden Kombinationsvariante verzichtet, zumal die genannte Konfiguration der seitlichen Klotzkanten zueinander in der folgenden Figur dargestellt ist, allerdings mit Quereinschnitten.

Figur 8 zeigt - teils auschnittsweise - drei in der Umfangsrichtung aufeinanderfolgende Klötze 4 mit Quereinschnitten 5, die analog Figur 4 sowohl in ihrer Dichte als auch in ihrer Tiefe entgegen der Umlaufrichtung 8 zunehmen, wodurch die nacheilenden Kanten 7z weicher sind als die voreilenden Kanten 7a. Zur Détaillierung dieser Längseinschnitte sind die gleichen Bezugszeichen verwandt wie in Figur 4, sodaß die entsprechenden Beschreibungsstellen zur Vermeidung von Wiederholungen auch hierauf zu lesen sind.

Figur 8 zeigt die bereits in Figur 4 gezeigten Maßnahmen zur erfindungsgemäßen Aufweichung der nacheilenden Klotzkanten 7z kombiniert mit einer Verlängerung der nacheilenden Klotzkanten 7z gegenüber den voreilenden 7a und zwar dadurch, daß die seitlichen Klotzkanten 10 über der Umlaufrichtung 8 aufeinander zulaufen. Die die Klötze 4 seitlich begrenzenden Flächen sind also in die Umlaufrichtung 8 gepfeilt. Durch die so bewirkte Verlängerung der nacheilenden Klotzkanten 7z gegenüber den voreilenden 7a wird der Effekt des verminderten Abriebes in der Höhe noch weiter gesteigert.

Natürlich wäre auch eine Kombination dieser in ihrer Dichte und ggf. Tiefe entgegen der Umlaufrichtung zunehmenden Quereinschnitte 5 - ggf. zusätzlich - mit der anderen - in Figur 7 gezeigten - Variante zur Verlängerung der nacheilenden Klotzkante 7z möglich, daß nämlich der Winkel β, den die nacheilenden Klotzkanten 7z mit der Umlaufrichtung einschließen, kleiner als der Winkel β' ist, den die voreilende Klotzkante 7a zur Umfangsrichtung einschließt. Auch hierdurch würde der Effekt des verminderten Abriebes weiter gesteigert.

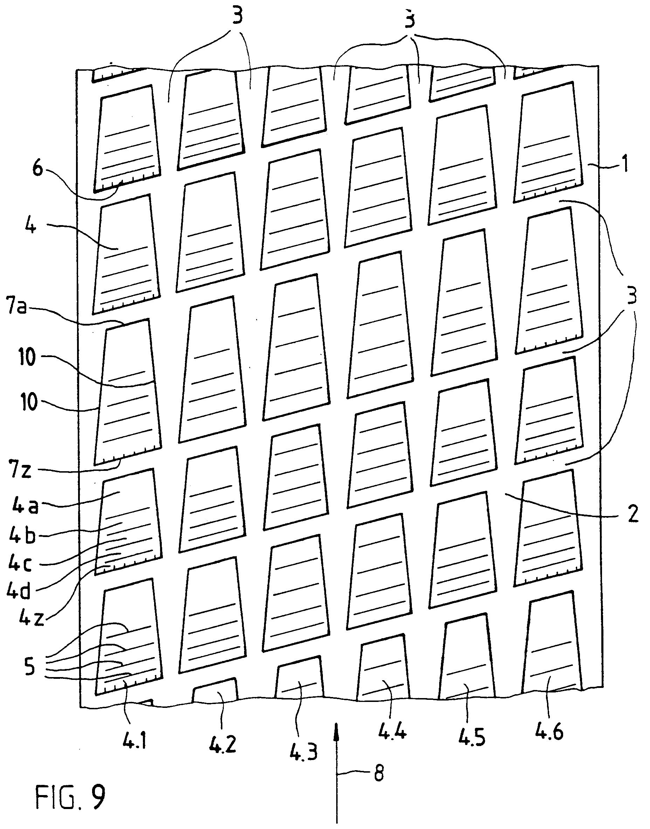

Figur 9 zeigt einen Umfangsausschnitt einer erfindungsgemäßen Lauffläche 2 eines Fahrzeugreifens 1 in seiner ganzen axialen Erstreckung mit sechs nebeneinander angeordneten Klotzreihen 4.1 bis 4.6 nahezu in der Gestaltung, wie in Figur 8 für eine Klotzreihe dargestellt; von Figur 8 abweichend weist hier jedoch jeder Klotz 4 vier statt dreier Quereinschnitte 5 auf und die Quereinschnitte 5 sind als Sackschnitte ausgebildet, durchschneiden also den jeweiligen Klotz 4 nicht vollständig, sondern enden in der Axialen kurz vor den jeweiligen seitlichen Klotzkanten 10. Hierdurch wird über der Axialen eine gleichmäßigere und für den Abrieb günstigere Steifigkeitsverteilung erreicht.

Die die Klötze 4 begrenzenden Negative, die Längs- und Querrillen sind einheitlich mit dem Bezugszeichen 3 markiert.

Entsprechend dem Anspruch 10 zeigt diese Figur weiterhin in den vier axial äußeren Klotzreihen 4.1, 4.2, 4.5 und 4.6 eine stärkere Verdichtung der Quereinschnitte 5 zu den entsprechend dem eingezeichneten Drehsinn 8 nacheilenden Klotzkanten 7z hin, sodaß dort die Differenz der verbleibenden Härte zwischen voreilendem (4a) und nacheilendem Klotzbereich 4z besonders groß, in den beiden mittleren Klotzreihen 4.3 und 4.4 hingegen weniger groß ist. Diese Differenzierung in der Axialen trägt der Beobachtung Rechnung, daß der zu bekämpfende Sägezahneffekt sich in den axial äußeren Klotzreihen stärker zeigt als in den axial inneren. Aus dem gleichen Grunde weisen die beiden axial äußersten Klotzreihen 4.1 und 4.6 bei gleicher Anordnung der Quereinschnitte wie die nach axial innen hin benachbarten Klotzreihen 4.2 und 4.5 zusätzlich kurze Längseinschnitte 6 an den nacheilenden Klotzreihen auf.

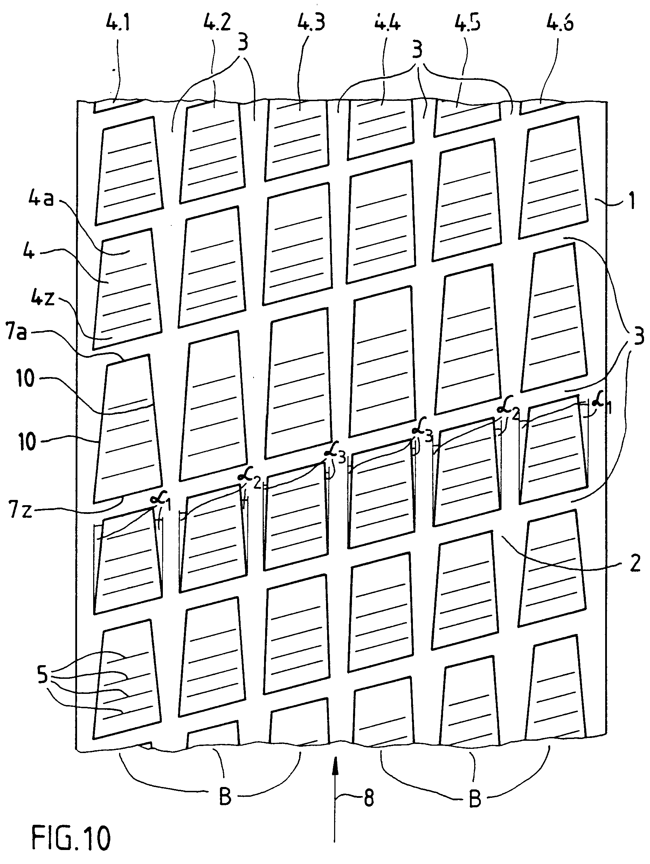

Figur 10 zeigt ebenfalls einen Umfangsausschnitt einer erfindungsgemäßen Lauffläche 2 eines Fahrzeugreifens 1 in seiner ganzen axialen Erstreckung mit sechs nebeneinander angeordneten Klotzreihen 4.1 bis 4.6 nahezu in der Gestaltung, wie in Figur 9 dargestellt; auch hier weist jeder Klotz vier Quereinschnitte 5 auf, die als Sackschnitte ausgebildet sind.

Auch dieses Profil weist eine axiale Differenzierung auf als Antwort auf den sich axial unterschiedlich stark einstellenden Sägezahneffekt bei Profilen nach dem Stand der Technik:
Abweichend von Figur 9, wo die Aufweichungsdifferenz zwischen vorderem Klotzbereich 4a und hinterem 4z von axial innen nach axial außen hin zunimmt sind hier jedoch bei über der Axialen konstanter Aufweichungsdifferenz entsprechend Anspruch 10 die nacheilenden Klotzkanten 7z gegenüber den voreilenden 7a axial außen um einen größeren Betrag verlängert als axial innen.

In den äußersten Klotzreihen 4.1 und 4.6 sind nämlich die Klotzlängskanten 10 um den Winkel Alpha₁ gleich 6° gegenüber der Umfangsrichtung schräg gestellt, in den benachbarten Klotzreihen 4.2 und 4.5 nur um den Winkel Alpha₂ gleich 4° und in den innersten Klotzreihen 4.3 und 4.4 schließlich nur um den Winkel Alpha₃ gleich 2°.

## Patentansprüche

1. An einen Drehsinn (8) (= Umlaufrichtung) gebundener Fahrzeugreifen (1) mit einer Querrillen (3) aufweisenden Profilierung der Lauffläche (2), wobei die Profilpositive (4) zwischen den Querrillen (3) durch Längseinschnitte (6) aufgeweicht sind, wobei die Aufweichung durch Längseinschnitte (6) im zuletzt in die Bodenaufstandsfläche einlaufenden Bereich größer ist als im zuerst in die Bodenaufstandsfläche einlaufenden Bereich,
**dadurch gekennzeichnet,** daß die Anzahl der Längseinschnitte (6) vom zuerst in die Bodenaufstandsfläche einlaufenden Bereich zu mindestens einem Zwischenbereich und schließlich zum zuletzt einlaufenden Bereich zunimmt , sodaß die einschnitt-bedingte Aufweichung in mindestens zwei Stufen von der zuerst in die Bodenaufstandsfläche einlaufenden Positivkante (7a) bis hin zur zuletzt in die Bodenaufstandsfläche einlaufenden Positivkante (7z) gesteigert ist.

2. An einen Drehsinn (8) (= Umlaufrichtung) gebundener Fahrzeugreifen (1) mit einer Querrillen (3) aufweisenden Profilierung der Lauffläche (2), wobei die Profilpositive (4) zwischen den Querrillen (3) durch Längseinschnitte (6) aufgeweicht sind, wobei die Aufweichung durch Längseinschnitte (6) im zuletzt in die Bodenaufstandsfläche einlaufenden Bereich größer ist als im zuerst in die Bodenaufstandsfläche einlaufenden Bereich,
**dadurch gekennzeichnet,** daß die Tiefe (t) der Längseinschnitte (6) vom zuerst in die Bodenaufstandsfläche einlaufenden Bereich zum zuletzt einlaufenden Bereich stufenlos zunimmt, sodaß die einschnitt-bedingte Aufweichung stufenlos von der zuerst in die Bodenaufstandsfläche einlaufenden Positivkante (7a) bis hin zur zuletzt in die Bodenaufstandsfläche einlaufenden Positivkante (7z) gesteigert ist.

3. Fahrzeugreifen (1) nach Anspruch 1 gekennzeichnet durch die kennzeichnenden Merkmale nach Anspruch 2.

4. An einen Drehsinn (8) (= Umlaufrichtung) gebundener Fahrzeugreifen (1) mit einer Querrillen (3) aufweisenden Profilierung der Lauffläche (2), wobei die Profilpositive (4) zwischen den Querrillen (3) durch Quereinschnitte (5) aufgeweicht sind und die Aufweichung durch Quereinschnitte (5) im zuletzt in die Bodenaufstandsfläche einlaufenden Bereich (4z) größer ist als im zuerst in die Bodenaufstandsfläche einlaufenden Bereich (4a),
**dadurch gekennzeichnet,** daß vom zuerst in die Bodenaufstandsfläche einlaufenden Bereich (4a) bis zum zuletzt in die Bodenaufstandsfläche einlaufenden Bereich (4z) sowohl die Tiefe (t) der Quereinschnitte (5) zunimmt als auch der Abstand zwischen den Quereinschnitten (5) in mehreren Stufen abnimmt.

5. Fahrzeugreifen (1) nach einem der vorangehenden Ansprüche gekennzeichnet dadurch, daß er in an sich bekannter Weise zumindest eine Längsrille (3) aufweist, sodaß die Profilpositive in Form seperater Klötze (4) vorliegen, welche in an sich bekannter Weise eine voreilende (7a) und eine nacheilende Kante (7b) aufweisen, und dadurch, daß für alle die Bodenaufstandsfläche durchlaufenden Klötze gilt, daß ihre nacheilende Kante (7b) länger als die voreilende Kante (7a) ist.

6. Fahrzeugreifen (1) nach Anspruch 5 mit in zumindest einer Klotzreihe angeordneten Klötzen dadurch gekennzeichnet, daß alle Klötze (4) besagter Klotzreihe(n) die größere Länge der nacheilenden Klotzkanten (7z) dadurch erreichen, daß die nacheilenden Klotzkanten (7z) einen kleineren Winkel (β) zur Laufrichtung (8) einschließen als die voreilenden Kanten (7a).

7. Fahrzeugreifen (1) nach Anspruch 6, bei dem zumindest innerhalb einer Klotzreihe die Querrillen (3) in der Weise gepfeilt sind, daß ein Gehen innerhalb dieser Querrillen (3) nach axial außen einem Gehen entgegen der Umlaufrichtung (8) entspricht, dadurch gekennzeichnet, daß sich die Querrillen (3) nach axial außen hin verengen.

8. Fahrzeugreifen (1) nach Anspruch 7 mit in zumindest einer Klotzreihe (B) angeordneten Klötzen (4), deren seitliche Kanten (10) nicht parallel zueinander verlaufen, dadurch gekennzeichnet, daß alle Klötze (4) besagter Klotzreihe(n) (B) die größere Länge der nacheilenden Klotzkanten (7z) dadurch erreichen, daß die seitlichen Kanten (10) ihren in der Axialen zu messenden Abstand zueinander entlang der Umlaufrichtung (8) verkleinern, also in die Umlaufrichtung gepfeilt sind.

9. Fahrzeugreifen nach Anspruch 1 oder 2 oder 4 dadurch gekennzeichnet, daß die Differenz in der Aufweichung zwischen voreilendem Bereich und nacheilendem Bereich in den axial äußersten Positiv-Reihen (4.1, 4.6) größer ist als in den bzw. der axial inneren Positiv-Reihe (4.3, 4.4).

10. Fahrzeugreifen nach Anspruch 5 dadurch gekennzeichnet, daß die Differenz zwischen der Länge der voreilenden Querkante (7a) und der Länge der nacheilenden Querkante (7z) in den axial äußersten Positiv-Reihen (4.1, 4.6) größer ist als in den bzw. der axial inneren Positiv-Reihe (4.3, 4.4).

## Claims

1. Vehicle tyre (1) adapted to a rotational direction (8) (= direction of rotation), having a profiling of the tread surface (2), which profiling comprises transverse notches (3), the profile positives (4) between the transverse notches (3) yielding by means of longitudinal incisions (6), and the yielding by means of longitudinal incisions (6) being greater in the region finally extending into the ground engaging surface than in the region initially extending into the ground engaging surface, characterised in that the number of longitudinal incisions (6) increases from the region initially extending into the ground engaging surface to at least one intermediate region and ultimately to the finally extending region, so that the yielding occasioned by the incisions is increased in at least two stages from the positive edge (7a) initially extending into the ground engaging surface up to the positive edge (7z) finally extending into the ground engaging surface.

2. Vehicle tyre (1) adapted to a rotational direction (8) (= direction of rotation), having a profiling of the tread surface (2), which profiling comprises transverse notches (3), the profile positives (4) between the transverse notches (3) yielding by means of longitudinal incisions (6), and the yielding by means of longitudinal incisions (6) being greater in the region finally extending into the ground engaging surface than in the region initially extending into the ground engaging surface, characterised in that the depth (t) of the longitudinal incisions (6) increases steplessly from the region initially extending into the ground engaging surface to the finally extending region, so that the yielding occasioned by the incisions is increased steplessly from the positive edge (7a) extending initially into the ground engaging surface up to the positive edge (7z) extending finally into the ground engaging surface.

3. Vehicle tyre (1) according to claim 1, characterised by the characterising features according to claim 2.

4. Vehicle tyre (1) adapted to a rotational direction (8) (= direction of rotation), having a profiling of the tread surface (2), which profiling comprises transverse notches (3), the profile positives (4) between the transverse notches (3) yielding by means of transverse incisions (5), and the yielding by means of transverse incisions (5) being greater in the region (4z) extending finally into the ground engaging surface than in the region (4a) extending initially into the ground engaging surface, characterised in that both the depth (t) of the transverse incisions (5) increases from the region (4a) extending initially into the ground engaging surface to the region (4z) extending finally into the ground engaging surface, and the spacing between the transverse incisions (5) decreases in a plurality of stages.

5. Vehicle tyre (1) according to one of the preceding claims, characterised in that it comprises, in a manner known per se, at least one longitudinal notch (3), so that the profile positives protrude in the form of separate blocks (4), which have, in a manner known per se, a leading edge (7a) and a trailing edge (7b), and in that it is applicable to all of the blocks which traverse the ground engaging surface that their trailing edge (7b) is longer than the leading edge (7a).

6. Vehicle tyre (1) according to claim 5, having blocks disposed in at least one row of blocks, characterised in that all blocks (4) of said row(s) of blocks achieve the greater length of the trailing block edges (7z), in that the trailing block edges (7z) form a smaller angle (β) relative to the direction of travel (8) than the leading edges (7a).

7. Vehicle tyre (1) according to claim 6, wherein, at least internally of a row of blocks, the transverse notches (3) are swept back in such a manner that an axially outward travel movement internally of these transverse notches (3) corresponds to a travel movement in opposition to the direction of rotation (8), characterised in that the transverse notches (3) narrow axially outwardly.

8. Vehicle tyre (1) according to claim 7, having blocks (4) disposed in at least one row of blocks (B), the lateral edges (10) of which blocks do not extend parallel to one another, characterised in that all of the blocks (4) of said row(s) of blocks (B) achieve the greater length of the trailing block edges (7z), in that the lateral edges (10) reduce their spacing from one another along the direction of rotation (8), that is to say they are swept back in the direction of rotation, said spacing to be measured axially.

9. Vehicle tyre according to claim 1 or 2 or 4, characterised in that the difference in the yielding between leading region and trailing region is greater in the axially outermost positive rows (4.1, 4.6) than in the axially inner positive row or rows (4.3, 4.4) respectively.

10. Vehicle tyre according to claim 5, characterised in that the difference between the length of the leading transverse edge (7a) and the length of the trailing transverse edge (7z) is greater in the axially outermost positive rows (4.1, 4.6) than in the axially inner positive row or rows (4.3, 4.4) respectively.

## Revendications

1. Pneu pour automobile (1) lié au sens de rotation (8) (= sens périphérique) dont la bande de roulement (2) est sculptée par des cannelures transversales (3), les parties positives (4) de la bande de roulement situées entre les cannelures transversales (3) étant assouplies par des entailles longitudinales (6), l'assouplissement par les entailles longitudinales (6) étant supérieure dans la zone entrant en dernier en contact avec le sol que dans la zone qui entre en premier en contact avec le sol,
caractérisé en ce que le nombre d'entailles longitudinales (6) de la zone qui entre en premier en contact avec le sol augmente en allant vers au moins une zone intermédiaire et enfin vers la zone entrant en dernier en contact avec le sol, de telle sorte que l'assouplissement dû aux entailles s'accroît en deux étapes au moins, en allant de l'arête de la partie positive (7a), qui entre en premier en contact avec le sol, vers l'arête de la partie positive (7z) qui entre en dernier en contact avec le sol.

2. Pneu pour automobile (1) lié au sens de rotation (8) (= sens périphérique) dont la bande de roulement (2) est sculptée par des cannelures transversales (3), les parties positives (4) de la bande de roulement situées entre les cannelures transversales (3) étant assouplies par des entailles longitudinales (6), l'assouplissement par les entailles longitudinales (6) étant supérieure dans la zone qui entre en dernier en contact avec le sol que dans la zone qui entre en premier en contact avec le sol,
caractérisé en ce que la profondeur (t) des entailles longitudinales (6) augmente en continu en allant de la zone qui entre en premier en contact avec le sol vers la zone qui entre en dernier en contact avec le sol, de telle sorte que l'assouplissement dû aux entailles s'accroît en deux étapes au moins, en allant de l'arête de la partie positive (7a), qui entre en premier en contact avec le sol, vers l'arête de la partie positive (7z) qui entre en dernier en contact avec le sol.

3. Pneu pour automobile selon la revendication 1, caractérisé par les propriétés caractérisantes selon la revendication 2.

4. Pneu pour automobile (1) lié au sens de rotation (8) (= sens périphérique) dont la bande de roulement (2) est sculptée par des cannelures transversales (3), les parties positives (4) de la bande de roulement situées entre les cannelures transversales (3) étant assouplies par des entailles transversales (5), l'assouplissement par les entailles transversales (5) étant supérieure dans la zone (4z) entrant en dernier en contact avec le sol que dans la zone (4a) qui entre en premier en contact avec le sol,
caractérisé en ce que, en allant de la zone (4a), qui entre en premier en contact avec le sol, vers la zone (4z) qui entre en dernier en contact avec le sol, la profondeur (t) des entailles transversales (5) augmente en plusieurs étapes, de même que la distance entre les entailles transversales (5) diminue en plusieurs étapes.

5. Pneu pour automobile (1) selon l'une quelconque des revendications précédentes, caractérisé en ce qu'il est muni, d'une manière connue, au moins d'une cannelure longitudinale (3), de telle sorte que les parties positives de la bande de roulement se présentent sous forme de blocs séparés, lesquels sont formés, d'une manière connue, d'une arête avancée (7a) et d'une arête arrière (7b), et en ce que l'arête arrière (7b) de tous les blocs qui entrent en contact avec le sol est plus longue que l'arête avancée (7a).

6. Pneu pour automobile (1) selon la revendication 5, formé par des blocs disposés sur une rangée de blocs au moins, caractérisé en ce que tous les blocs (7) desdites rangées de blocs obtiennent une arête arrière (7z) plus longue du fait que les arêtes arrières (7z) des blocs forment un angle (β) avec le sens périphérique (8) plus petit que celui formé par les arêtes avancées (7a).

7. Pneu pour automobile (1) selon la revendication 6, dans lequel les cannelures transversales (3) à l'intérieur d'au moins une rangée de blocs sont disposées de manière à former une flèche, de telle sorte qu'un passage à l'intérieur de ces cannelures transversales (3) dans le sens axial vers l'extérieur correspond à un passage dans le sens inverse du sens de rotation (8), caractérisé en ce que les cannelures transversales (3) deviennent plus étroites en allant vers l'extérieur dans le sens axial.

8. Pneu pour automobile (1) selon la revendication 7, formé de blocs (4) disposés sur une rangée de blocs (B) au moins, dont les arêtes latérales (10) ne sont pas parallèles entre elles, caractérisé en ce que tous les blocs (4) desdites rangées de blocs obtiennent une arête arrière (7z) plus longue du fait que la distance à mesurer dans le sens axial entre les arêtes latérales (10) diminue le long du sens périphérique (8), elles forment donc une flèche dans le sens périphérique (8).

9. Pneu pour automobile (1) selon la revendication 1 ou 2 ou 4, caractérisé en ce que la différence d'assouplissement entre la zone avancée et la zone arrière dans les rangées de blocs (4.1, 4.6) extérieures dans le sens axial est plus grande que dans les mêmes zones des rangées de blocs (4.3, 4.4) intérieures dans le sens axial.

10. Pneu pour automobile (1) selon la revendication 5, caractérisé en ce que la différence entre la longueur de l'arête transversale avancée (7a) et la longueur de l'arête transversale arrière (7z) dans les rangées de blocs (4.1, 4.6) extérieures dans le sens axial est plus grande que sur les mêmes arêtes des rangées de blocs (4.3, 4.4) intérieures dans le sens axial.
